# FASCICULE DE BREVET EUROPEEN

(11) **EP 3 696 492 B1**
(45) Date de publication et mention de la délivrance du brevet: **14.08.2024**
(21) Numéro de dépôt: 20156283.2
(22) Date de dépôt: 10.02.2020
(51) Int. Cl.: G01B 7/16, G01B 21/32, G01L 3/10, G01L 5/10, F16C 41/00, F16C 7/02, B64C 13/30, B64C 27/54, B64D 45/00

(54) **SYSTEME DE DETECTION ET PROCEDE POUR DETECTER UNE USURE D'UN DISPOSITIF DE LIAISON A ROTULE D'UNE BIELLE, ENSEMBLE ROTOR ET AERONEF**
DETEKTIONSSYSTEM UND -VERFAHREN ZUR VERSCHLEISSERKENNUNG EINER PLEUELSTANGEN-GELENKVERBINDUNG, ROTOREINHEIT UND LUFTFAHRZEUG
DETECTION SYSTEM AND METHOD FOR DETECTING WEAR OF A DEVICE WITH BALL-AND-SOCKET JOINT FOR CONNECTING A CONNECTING ROD, ROTOR ASSEMBLY AND AIRCRAFT

(30) Priorité: 12.02.2019 FR 1901377
(43) Date de publication de la demande: 19.08.2020
(73) Titulaire: Airbus Helicopters, 13725 Marignane Cedex (FR)
(72) Inventeur: Florent, DEPROUW, 13100 AIX EN PROVENCE (FR)
(74) Mandataire: GPI Brevets

(56) Documents cités:
- WO-A1-2013/021216
- WO-A1-2014/153518
- WO-A1-2018/152277
- DE-A1- 10 059 917
- FR-A1- 2 599 793
- FR-A1- 2 943 619
- JP-A- 2009 254 163
- US-A1- 2008 036 617

## Description

La présente invention concerne un système de détection et un procédé pour détecter une usure d'un dispositif de liaison à rotule d'une bielle, ainsi qu'un ensemble rotor et un aéronef muni d'un tel système.

Pour réaliser une liaison à rotule entre deux pièces mécaniques, un opérateur peut utiliser un dispositif de liaison à rotule. Un tel dispositif est parfois dénommé plus simplement « rotule ».

Un dispositif de liaison à rotule peut comprendre une cage extérieure et une bille. La bille est alors insérée dans la cage extérieure pour être mobile en rotation par rapport à cette cage extérieure. Un moyen anti-frottement peut être interposé entre la bille sphérique et la cage extérieure. Ce moyen anti-frottement peut être fixé à la paroi interne de la cage extérieure en regard de la bille sphérique, ou à l'inverse à la paroi externe de la bille sphérique en regard de la cage extérieure. Un tel moyen anti-frottement est parfois dénommé « liner » en langue anglaise ou « tissu ».

La bille elle-même est parfois dénommée « rotule » ou encore « bague intérieure » par exemple. Cette bille est aussi parfois dénommée « bille sphérique ». Toutefois, cette expression peut paraître abusive dans la mesure où la bille comporte parfois au moins un méplat voire deux méplats à deux extrémités diamétralement opposées. Ainsi, la bille est en fait une sphère tronquée au niveau d'au moins un pôle. Une bille peut aussi être solidaire d'une tige ou traversée par une tige. L'expression « bille » est retenue par la suite.

Dans ces conditions, la cage extérieure peut être fixée par des moyens usuels à une première pièce mécanique. De même, la bille peut être fixée à une deuxième pièce mécanique, par exemple en utilisant une tige de fixation traversant de part en part la bille par ses pôles tronqués.

Un tel dispositif de liaison à rotule est fréquemment utilisé. En particulier, un rotor d'un aéronef tel que par exemple un rotor principal d'un hélicoptère peut comporter des bielles de pas pour piloter le pas des pales. Par exemple une bielle de pas est articulée d'une part à un plateau tournant d'un ensemble de plateaux cycliques par un premier dispositif à rotule et d'autre part à un levier de pas par un deuxième dispositif à rotule. La cage extérieure de chaque dispositif à rotule est alors solidarisée à un organe de la bielle, la bille du premier dispositif à rotule étant solidarisée au plateau tournant de l'ensemble de plateaux cycliques et la bille du deuxième dispositif à rotule étant solidarisée au levier de pas.

Les dispositifs à rotule sont efficaces. Cependant, le moyen anti-frottement et/ou la bille et/ou la cage extérieure s'érodent naturellement au cours de la vie du dispositif de liaison à rotule. L'usure en résultant entraîne la création d'un jeu indu entre cette bille et cette cage extérieure. Sur une bielle de pas d'un rotor d'aéronef, un tel jeu a un impact néfaste sur le contrôle de l'aéronef. Par conséquent, cette usure conduit finalement au remplacement du dispositif de liaison à rotule en fonction d'un critère de dépose établi par le constructeur. Ce critère de dépose peut consister en un jeu maximal admissible entre la cage extérieure et la bille.

Néanmoins, la mesure d'un tel jeu est difficile et éventuellement effectuée en suivant une procédure susceptible d'être longue et relativement onéreuse. Par exemple, cette procédure peut nécessiter de démonter chaque bielle de pas en réalisant les actions suivantes : ascension d'un opérateur au niveau du rotor par une échelle ou une plateforme, ouverture d'un capot de protection, mise en condition du rotor par exemple via un réglage d'un pas des pales et/ou un blocage en rotation du rotor, démontage des bielles, vérification du jeu de chaque bielle, remontage des bielles, libération du rotor, fermeture du capot de protection, descente de l'opérateur.

Outre la durée relativement longue de cette procédure, un opérateur doit utiliser des outils divers pour réaliser cette action de maintenance ce qui peut compliquer son application. En outre, cette procédure implique une évaluation humaine du jeu de fait susceptible d'être erronée.

Le document WO2013021216 décrit un appareil pour déterminer un couple mécanique dans un arbre. L'appareil comprend un élément allongé avec une région affaiblie à mi-chemin sur sa longueur; et des moyens pour fixer l'élément à l'arbre de chaque côté de la région affaiblie, de préférence au voisinage de chaque extrémité de l'élément allongé.

Le document DE10059917 décrit un boitier de mesure pour mesurer des charges sur des éléments de machine tels que des arbres ou des axes. Ce boitier de mesure inclut un manchon de mesure enveloppant l'élément de machine. Ce manchon est équipé de transducteurs, ainsi que de moyens pour transmettre des valeurs mesurées à une unité d'analyse externe. Le manchon est engagé avec l'élément de machine au moyen de deux brides disposées axialement l'une de l'autre sur le manchon de mesure. Ce boitier de mesure comporte deux demi-coques reliées de manière amovible l'une à l'autre, et entourant localement l'élément de machine et le manchon de mesure avec les transducteurs.

Les documents US 2008/036617, FR 2599793, WO 2014/153518 et WO 2018/152277 sont aussi connus.

La présente invention a alors pour objet un système visant à faciliter la détection d'un dispositif de liaison à rotule usé devant engendrer la dépose de ce dispositif de liaison à rotule.

L'invention concerne un système de détection tel que revendiqué pour détecter une usure d'un dispositif de liaison à rotule d'une bielle de pas d'un ensemble rotor.

Ce système de détection comporte au moins un ensemble de mesure, cet au moins un ensemble de mesure ayant au moins une jauge de déformation à placer sur une bielle de pas à surveiller, ce système de détection comprenant au moins un circuit électrique de traitement relié à au moins une dite jauge de déformation et à au moins une source d'énergie électrique, le circuit électrique de traitement étant configuré pour élaborer un signal de mesure variant en fonction d'une déformation de ladite au moins une jauge de déformation et en fonction de ladite usure.

Le système peut comprendre un ou plusieurs circuits électriques de traitement par ensemble de mesure, éventuellement agencés sur une ou plusieurs cartes électroniques. De même, le système peut comprendre une ou plusieurs sources d'énergie électrique par ensemble de mesure, une même source d'énergie électrique pouvant alimenter électriquement un ou plusieurs circuits électriques de traitement. Par exemple, chaque ensemble de mesure comprend plusieurs sous-ensembles munis chacun d'au moins une jauge de déformation, le système comprenant un circuit électrique de traitement par sous-ensemble et une source d'énergie électrique par circuit électrique de traitement.

Par ailleurs, un circuit électrique de traitement comporte par exemple un pont de Wheastone usuel. Le circuit électrique de traitement comporte un organe élaborant le signal de mesure, tel qu'un organe mesurant une différence de potentiel électrique ou une intensité électrique voire une capacité électrique par exemple. Un circuit électrique de traitement peut comprendre une sortie pour transmettre le signal de mesure à un autre organe pour traitement et/ou une mémoire pour mémoriser chaque signal de mesure afin de permettre son exploitation ultérieure. Une source d'énergie peut comprendre au moins une pile, au moins une batterie, au moins un récupérateur d'énergie électrique...

Un tel système de détection peut permettre d'évaluer la présence d'un jeu inadéquat sur un dispositif de liaison à rotule d'une bielle et notamment d'une bielle de pas d'un rotor d'aéronef, et par exemple un jeu faible supérieur ou égal à 0.25 millimètre.

En utilisation, les commandes appliquées par un pilote humain ou automatique ainsi que les mouvements de la pale reliée directement ou par exemple via un manchon à la bielle de pas et les vibrations du rotor génèrent des forces exercées sur la bielle de pas. Ces forces déforment la bielle de pas. Or, une bielle de pas se déforme différemment en présence d'un jeu inadéquat dans un de ces dispositifs de liaison à rotule. Des indicateurs prédéterminés appliqués au signal de mesure brut ou traité peuvent étonnamment permettre d'identifier un tel jeu.

Dès lors, ce système de détection est muni d'au moins une jauge de déformation, par exemple une jauge extensométrique en traction ou en flexion, agencée sur une bielle de pas pour mesurer une déformation de la bielle de pas en temps réel de manière usuelle. Le signal de mesure élaboré par le circuit électrique de traitement à partir de la déformation de la jauge de déformation, image de la déformation de la bielle de pas, est alors exploité pour identifier la présence d'un jeu devant provoquer une action de maintenance. Le signal de mesure peut être exploité pour obtenir un ou plusieurs indicateurs dans le domaine temporel ou fréquentiel et pour déterminer si une action de maintenance doit être entreprise en étudiant ces indicateurs. Le signal de mesure peut être exploité en temps réel ou ultérieurement. Le signal de mesure peut être exploité au sein même de l'aéronef ou de manière déportée.

En effet, pour une même bielle de pas le signal de mesure varie en fonction de l'usure du dispositif de liaison à rotule, cette variation étant détectable en présence d'un jeu inadéquat en réalisant une analyse particulière dans le domaine temporel et/ou dans le domaine fréquentiel.

Par suite, la présente invention propose de surveiller l'usure d'un dispositif de liaison à rotule en utilisant au moins une jauge de déformation portée par une bielle de pas et en analysant le signal de mesure par exemple en le comparant à un seuil mémorisé déterminé par essais. Cette procédure n'impose donc pas de démonter une bielle de pas pour la tester.

De plus, le système de détection peut s'avérer sécuritaire dans la mesure où la détection d'une usure exagérée est réalisée automatiquement au moins en partie par le système de détection ce qui peut réduire les risques de maintien en position d'une bielle de pas usée suite à une erreur d'appréciation humaine.

Dès lors, ce système de détection peut être agencé au moins partiellement sur un rotor pour détecter le dépassement d'un seuil d'un jeu dans une liaison à rotule d'une bielle de pas sans démontage, voire sans obliger un opérateur à monter sur le rotor. Ce système de détection détecte de manière innovante des déformations inhabituelles de la bielle de pas au cours d'un vol pour témoigner de l'état des liaisons à rotule.

Selon l'invention, le système de détection comprend un calculateur de surveillance en communication avec ledit au moins un circuit électrique de traitement, le calculateur de surveillance étant configuré pour traiter ledit signal de mesure et déterminer la présence d'une dite usure impliquant une action de maintenance sur ladite bielle de pas lorsque ledit signal de mesure traité par le calculateur de surveillance présente une anomalie prédéterminée. Une telle anomalie peut prendre la forme d'un signal de mesure temporel dépassant un seuil mémorisé ou d'une composante fréquentielle d'un signal dans le domaine fréquentiel ayant une amplitude supérieure ou inférieure à un seuil mémorisé. Une telle composante fréquentielle d'un signal dans le domaine fréquentiel peut prendre la forme d'une raie dans un diagramme fréquentiel.

Le système de détection peut de plus comporter une ou plusieurs des caractéristiques qui suivent.

Un calculateur de surveillance peut être dédié à un ensemble de mesure ou peut être mutualisé entre plusieurs ensembles de mesure. Le système de détection peut comprendre un ou plusieurs calculateurs de surveillance par ensemble de mesure, éventuellement agencés sur une ou plusieurs cartes électroniques. Par exemple, chaque ensemble de mesure comprend plusieurs sous-ensembles munis chacun d'au moins une jauge de déformation, le système de détection comprenant un circuit électrique de traitement par sous-ensemble et un calculateur de surveillance par circuit électrique de traitement voire une source d'énergie électrique par circuit électrique de traitement. Un seul calculateur de surveillance peut être dédié à plusieurs sous-ensembles.

Par ailleurs, un calculateur de surveillance peut être agencé dans un référentiel tournant d'un aéronef en étant porté par une bielle de pas ou par un organe tournant d'un ensemble rotor. Un calculateur de surveillance peut aussi être déporté dans un référentiel fixe en étant relié par des connexions filaires ou non filaires à au moins un circuit électrique de traitement. Alternativement ou de manière complémentaire, un calculateur de surveillance peut être déporté en dehors de l'aéronef en étant configuré pour être relié par des connexions filaires ou non filaires à au moins un circuit électrique de traitement.

Indépendamment de l'agencement d'un calculateur de surveillance, un calculateur de surveillance communique avec au moins un circuit électrique de traitement pour au moins récupérer un ou plusieurs signaux de mesure afin de déterminer la présence d'une anomalie prédéterminée pour estimer si un dispositif de liaison à rotule présente un jeu inacceptable. Le calculateur de surveillance peut comprendre une mémoire stockant au moins un signal de mesure avant traitement et/ou au moins un signal de mesure après traitement et/ou une information indiquant si une liaison à rotule est usée telle que par exemple une valeur du jeu déterminé ou une valeur booléenne représentative d'un état sain ou usé. Par exemple, un opérateur de maintenance au sol peut récupérer au sol un ou plusieurs signaux de mesure mémorisés dans au moins un circuit électrique de traitement par une liaison sans fil avec un tel calculateur de surveillance pour traitement. Selon un autre exemple, un opérateur de maintenance au sol peut récupérer au sol une information mémorisée dans un calculateur de traitement embarqué indiquant si un dispositif de liaison à rotule est usé.

Selon un aspect, le système de détection peut comporter un alerteur en communication avec un calculateur de surveillance, le calculateur de surveillance étant configuré pour commander l'alerteur afin de signaler une usure lorsque ledit signal de mesure traité présente ladite anomalie prédéterminée.

Eventuellement, un calculateur de surveillance peut traiter chaque signal de mesure en appliquant un algorithme robuste pour estimer si un dispositif de liaison à rotule présente une usure requérant une action de maintenance. Dans l'affirmative, le calculateur peut commander un alerteur pour signaler tactilement, visuellement ou de manière sonore que la bielle de pas doit subir une action de maintenance, par exemple dans un délai prédéterminé. Un tel alerteur peut prendre la forme d'un système tactile, visuel, sonore... Par exemple, un boîtier comprend un calculateur de surveillance et une diode électroluminescente d'un alerteur, le calculateur de surveillance allumant la diode électroluminescente si un jeu non acceptable est détecté lors du traitement d'un signal de mesure.

Selon un aspect, ledit système de détection peut comporter au moins une première antenne pour transmettre en dehors de l'ensemble rotor le signal de mesure ou un signal émis par un calculateur de surveillance qui est relié à un circuit électrique de traitement, ladite première antenne étant reliée au circuit électrique de traitement ou au calculateur de surveillance.

Eventuellement, un calculateur de surveillance peut être mutualisé entre plusieurs ensembles de mesure et peut être relié à une première antenne.

Eventuellement, un circuit électrique de traitement peut être relié à une première antenne communiquant avec une deuxième antenne d'un calculateur de surveillance.

Selon une possibilité non revendiquée chaque ensemble de mesure peut être directement fixé à la bielle de pas à surveiller. De même, un circuit électrique de traitement et/ou une source d'énergie électrique et/ou éventuellement un calculateur de surveillance et/ou une première antenne peuvent être fixés directement à cette bielle de pas pour s'affranchir de contraintes de câblage dans un référentiel tournant. Selon une possibilité, chaque bielle de pas peut présenter son propre système de détection.

Dès lors, le système de détection peut comporter un moyen d'attache pour fixer au moins un ensemble de mesure directement sur une bielle de pas. De même, un moyen d'attache peut fixer directement sur une bielle de pas un circuit électrique de traitement et/ou une source d'énergie électrique et/ou éventuellement un calculateur de surveillance et/ou une première antenne.

Par exemple, un moyen d'attache peut comprendre de la colle ou équivalent, une soudure, un système de vissage, un collier d'attache... ces exemples sont donnés à titre d'exemple. Un moyen d'attache est plus simplement dénommé « attache ».

Selon l'invention, un système de détection comporte un porteur, ledit porteur étant muni d'un dispositif de fixation à la bielle de pas à surveiller, ledit porteur comportant un tronçon de mesure déformable élastiquement portant un dit ensemble de mesure.

L'expression « dispositif de fixation à la bielle de pas à surveiller » désigne un ou plusieurs éléments participant au maintien du porteur sur une bielle de pas, par exemple deux organes à coincer entre deux écrous de la bielle de pas.

Cette variante peut éviter de modifier physiquement une bielle de pas pour y installer un ensemble de mesure. Un porteur peut être agencé de manière réversible et non destructive sur une bielle de pas. Au moins une jauge de déformation peut être fixée au porteur, ce porteur formant par exemple un boîtier porté par la bielle de pas. Par exemple, chaque bielle de pas d'un ensemble rotor est équipée d'un tel porteur.

Eventuellement, le porteur et les organes portés par ce porteur peuvent former un équipement qui présente un centre de gravité positionné sensiblement sur un axe central du porteur, cet axe central étant confondu avec une direction d'extension longitudinale d'une bielle de pas lorsque le porteur est porté par cette bielle de pas. Ainsi, le porteur est équilibré afin de ne pas introduire de contraintes additionnelles dans la bielle de pas pour ne pas altérer les mesures et pour éviter la rotation de cet équipement autour de la bielle de pas. Cette variante peut éventuellement éviter d'introduire de nouveaux modes d'usure, par exemple en évitant d'engendrer une rotation d'une bielle autour de son axe longitudinal. Selon un aspect, le tronçon de mesure peut comporter au moins une dite source d'énergie et/ou un dit circuit électrique de traitement. Par exemple au moins une source d'énergie et /ou au moins un circuit électrique de traitement est noyée dans le tronçon de mesure ou fixé à une paroi de ce tronçon de mesure.

Selon un aspect, le porteur peut comporter un premier tronçon comportant au moins une dite source d'énergie électrique, ledit porteur présentant un deuxième tronçon comprenant au moins un circuit électrique de traitement.

Le premier tronçon et le deuxième tronçon peuvent être distincts ou confondus.

Eventuellement, le porteur peut aussi porter les autres organes du système de détection pour former un équipement finalisé et démontable à fixer à une bielle de pas.

Le porteur peut porter plusieurs sources d'énergie électrique équidistantes circonférentiellement autour de l'axe central et/ou plusieurs circuits électriques de traitement équidistants circonférentiellement autour de l'axe central.

Selon l'invention, le tronçon de mesure entoure un espace creux configuré pour être traversé par ladite bielle de pas sans être en contact avec la bielle de pas, ledit tronçon de mesure étant agencé longitudinalement entre deux tronçons rigides à fixer à la bielle de pas.

Chaque jauge de déformation d'une bielle de pas est notamment portée par un tronçon de mesure déformable qui n'est étonnamment pas en contact avec la bielle de pas.

Selon une possibilité, le tronçon de mesure comporte une face interne cylindrique présentant un diamètre supérieur à un diamètre extérieur d'une face externe de la bielle de pas, un jeu radial séparant la face externe de la face interne.

Eventuellement, les deux tronçons rigides comportent respectivement le premier tronçon et le deuxième tronçon précités.

Selon un aspect, le système de détection peut comprendre une pluralité d'ensembles de mesure, chaque ensemble de mesure étant relié à un concentrateur par une liaison filaire ou non filaire, ledit concentrateur comprenant au moins ledit circuit électrique de traitement.

Selon un aspect non revendiqué, le système de détection peut comprendre des ensembles de mesure respectivement agencés sur des bielles de pas et un concentrateur. Le concentrateur peut comprendre au moins une source d'énergie et/ou au moins un calculateur de surveillance et/ou au moins une antenne et/ou au moins un circuit électrique de traitement. Un tel concentrateur permet de centraliser les fonctions de stockage d'énergie électrique et/ou de transmission sans fil et/ou de traitement. De plus, cet agencement permet d'alléger chaque équipement agencé sur les bielles de pas et donc d'alléger les contraintes résultant de cet agencement.

Selon un aspect, ledit au moins un ensemble de mesure peut comporter au moins une jauge de déformation en traction s'étendant selon une direction axiale, la direction axiale étant par exemple apte à être parallèle à une direction d'extension d'une bielle de pas.

Ainsi un sous-ensemble d'un ensemble de mesure peut comprendre une jauge de déformation en traction, et par exemple une jauge extensométrique.

Selon un aspect, ledit au moins un ensemble de mesure comporte au moins deux premières jauges de déformation en flexion agencées autour d'une direction qui est par exemple apte à être confondue avec une direction d'extension d'une bielle de pas.

Ainsi un sous-ensemble d'un ensemble de mesure peut comprendre au moins deux premières jauges de déformation en flexion par exemple de type extensométrique, et notamment une paire de premières jauges de déformation en flexion.

Eventuellement, un autre sous-ensemble peut comprendre au moins deux deuxièmes jauges de déformation en flexion et notamment une paire de deuxièmes jauges de déformation en flexion.

Selon un exemple robuste d'un point de vue mesure, ledit au moins un ensemble de mesure peut comporter au moins cinq dites jauges de déformation qui comprennent une jauge de déformation en traction ainsi qu'au moins deux premières jauges de déformation en flexion agencées autour d'un axe et au moins deux deuxièmes jauges de déformation en flexion agencées autour de cet axe, lesdites deux premières jauges de déformation en flexion et lesdites deux deuxièmes jauges de déformation en flexion étant décalées en azimut autour de cet axe.

Ces trois sous-ensembles permettent de réaliser respectivement des traitements différents et donc d'optimiser la détection d'une usure.

L'invention vise par ailleurs un ensemble rotor muni d'une pluralité de pales et de bielles de pas. Chaque bielle de pas s'étend longitudinalement d'une première zone jusqu'à une deuxième zone, au moins une desdites première zone et deuxième zone comprenant un dispositif de liaison à rotule. Chaque bielle de pas peut être mise en mouvement pour modifier le pas d'au moins une pale directement ou via d'autres organes mécaniques.

Par exemple l'ensemble rotor peut comprendre un plateau tournant relié mécaniquement à chaque pale respectivement au moins par une bielle de pas. Eventuellement, la première zone d'une bielle de pas est munie d'un premier dispositif de liaison à rotule relié au plateau tournant et la deuxième zone est munie d'un deuxième dispositif de liaison à rotule relié à un levier de pas,

Cet ensemble rotor comporte au moins un système de détection selon l'invention.

Chaque levier de pas peut être articulé à une pale ou à un manchon de pale.

L'invention vise par ailleurs un aéronef muni d'un tel ensemble rotor.

L'invention vise par ailleurs un procédé de détection pour détecter une usure d'un dispositif de liaison à rotule d'une bielle de pas d'un ensemble rotor d'un tel aéronef.

Lorsqu'au moins une jauge de déformation est une jauge de déformation en traction disposée pour mesurer une déformation selon une direction d'extension de la bielle de pas, le procédé peut comporter les étapes suivantes :
- établissement d'un signal de mesure temporel de traction en mesurant une déformation de la bielle de pas avec la jauge de déformation en traction,
- évaluation d'une phase de vol courante de l'aéronef,
- lorsque l'aéronef vole dans une phase de vol en palier, détection d'une usure impliquant le remplacement du dispositif de liaison à rotule lorsque le signal de mesure temporel de traction présente une amplitude erronée, et
- lorsque l'aéronef est dans une phase de vol d'approche, établissement d'un signal de mesure traité au moins en effectuant une transformation de Fourrier du signal de mesure temporel de traction et détection d'une usure impliquant le remplacement du dispositif de liaison à rotule lorsque le signal traité présente au moins une composante fréquentielle à une fréquence prédéterminée ou dans une plage prédéterminée de fréquences ayant une amplitude qui devient inférieure à un seuil de traction en approche.

Eventuellement, le signal de mesure temporel est obtenu en effectuant une moyenne du signal de mesure sur un nombre de tours prédéterminé de l'ensemble rotor, notamment pour une phase de vol en palier.

La phase de vol peut être évaluée de manière usuelle, par exemple par analyse de la vitesse de l'aéronef et/ou de son altitude.

L'expression « amplitude erronée » faite référence à une amplitude égale ou supérieure à un seuil établi par exemple par essais ou à une amplitude sensiblement différente des amplitudes relevées pour les autres bielles de pas d'un ensemble rotor.

Selon cette procédure, une jauge de déformation en traction peut permettre d'émettre un signal de mesure contenant deux indicateurs exploitables pour évaluer la présence d'une usure d'une rotule d'une bielle de pas. Un premier indicateur prend la forme d'une amplitude erronée d'un signal temporel de traction supérieure et un deuxième indicateur prend la forme d'une ou plusieurs composantes fréquentielles d'un signal traité dans le domaine fréquentiel dont l'amplitude est inférieure à un seuil de traction en approche établi par exemple par essais.

Lorsqu'au moins une jauge de déformation est une jauge de déformation en flexion disposée pour mesurer une déformation en flexion, le procédé comporte les étapes suivantes :
- établissement d'un signal de mesure temporel de flexion en mesurant une déformation de la bielle de pas avec la jauge de déformation en flexion,
- établissement d'un signal de mesure traité au moins en effectuant une transformation de Fourrier du signal de mesure temporel de flexion et détection d'une usure impliquant le remplacement du dispositif de liaison à rotule lorsque le signal de mesure traité présente au moins une composante fréquentielle à une fréquence prédéterminée ou dans une plage prédéterminée de fréquences ayant une amplitude qui devient supérieure à un seuil en flexion.

Eventuellement, le signal de mesure temporel est obtenu en effectuant une moyenne du signal de mesure sur un nombre de tours prédéterminé de l'ensemble rotor, notamment pour une phase de vol en palier.

Selon cette procédure, une voire au moins deux jauges de déformation en flexion peuvent permettre d'émettre un signal de mesure contenant un indicateur exploitable et fiable pour évaluer la présence d'une usure d'une rotule d'une bielle de pas. Cet indicateur prend la forme d'une ou plusieurs composantes fréquentielles d'un signal traité dans le domaine fréquentiel dont l'amplitude est supérieure à un seuil en flexion établi par exemple par essais.

L'invention et ses avantages apparaîtront avec plus de détails dans le cadre de la description qui suit avec des exemples donnés à titre illustratif en référence aux figures annexées qui représentent :
[Fig 1] la figure 1, une vue schématique d'un ensemble rotor muni d'un système de détection selon l'invention,
[Fig 2] la figure 2, une vue d'une bielle de pas non revendiquée équipée d'un système de détection,
[Fig 3] la figure 3, une vue d'une bielle de pas munie d'un porteur selon l'invention,
[Fig 4] la figure 4, un schéma illustrant un exemple de porteur selon l'invention,
[Fig 5] la figure 5, une vue de dessus schématique illustrant un porteur selon l'invention,
[Fig 6] la figure 6, une vue de dessus schématique illustrant un porteur selon l'invention,
[Fig 7] la figure 7, une vue partielle d'un ensemble rotor muni de porteurs de système de détection,
[Fig 8] la figure 8, un diagramme illustrant un signal de mesure temporel émis lors d'une phase de vol en palier à partir d'une jauge de déformation en traction agencée sur une bielle de pas ne présentant pas un dispositif de liaison à rotule usé,
[Fig 9] la figure 9, un diagramme illustrant un signal de mesure temporel émis lors d'une phase de vol en palier à partir d'une jauge de déformation en traction agencée sur une bielle de pas présentant un dispositif de liaison à rotule moyennement usé,
[Fig 10] la figure 10, un diagramme illustrant un signal de mesure temporel émis lors d'une phase de vol en palier à partir d'une jauge de déformation en traction agencée sur une bielle de pas présentant un dispositif de liaison à rotule très usé à déposer,
[Fig 11] la figure 11, un diagramme illustrant un signal de mesure temporel émis lors d'une phase de vol en approche à partir d'une jauge de déformation en traction agencée sur une bielle de pas ne présentant pas un dispositif de liaison à rotule usé,
[Fig 12] la figure 12, un diagramme illustrant un signal de mesure temporel émis lors d'une phase de vol en approche à partir d'une jauge de déformation en traction agencée sur une bielle de pas présentant un dispositif de liaison à rotule moyennement usé,
[Fig 13] la figure 13, un diagramme illustrant un signal de mesure temporel émis à partir d'une jauge de déformation en traction agencée sur une bielle de pas présentant un dispositif de liaison à rotule très usé à déposer,
[Fig 14] la figure 14, un diagramme illustrant un signal de mesure traité obtenu à partir d'un signal de mesure émis lors d'une phase de vol en approche à l'aide d'une jauge de déformation en traction agencée sur une bielle de pas ne présentant pas un dispositif de liaison à rotule usé,
[Fig 15] la figure 15, un diagramme illustrant un signal de mesure traité obtenu à partir d'un signal de mesure émis lors d'une phase de vol en approche à l'aide d'une jauge de déformation en traction agencée sur une bielle de pas présentant un dispositif de liaison à rotule usé à déposer, et
[Fig 16] la figure 16, un diagramme illustrant un signal de mesure traité obtenu à partir d'un signal de mesure émis à l'aide d'une jauge de déformation en flexion agencée sur une bielle de pas présentant une rotule saine et un signal de mesure traité obtenu à partir d'un signal de mesure émis à l'aide d'une jauge de déformation en flexion agencée sur une bielle de pas présentant un dispositif de liaison à rotule usé à déposer.

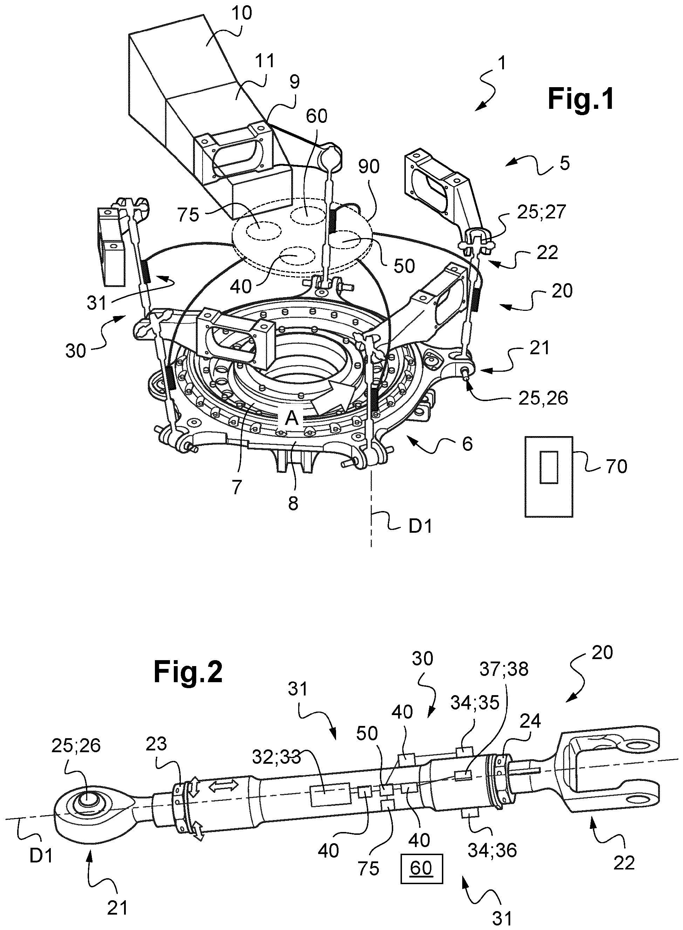

La figure 1 présente un exemple de réalisation d'un système de détection 30 selon l'invention visant à détecter la détection d'une usure d'un dispositif de liaison à rotule dit plus simplement rotule.

Un tel système de détection 30 peut être par exemple agencé sur un ensemble rotor 5 et en particulier un ensemble rotor 5 d'un aéronef 1 pour détecter une usure d'un dispositif de liaison à rotule 25 d'une bielle de pas 20.

En effet, un tel ensemble rotor 5 peut comprendre une pluralité de pales 10. Chaque pale 10 est portée par une tête rotor non représentée, éventuellement via un manchon 11 et/ou des dispositifs d'articulation et de retenue. Certaines pales peuvent comprendre des manchons intégrés.

En outre, l'ensemble rotor 5 comporte de multiples bielles de pas et comporte selon la figure 1 une bielle de pas 20 par pale 10 pour relier chaque pale 10 à des commandes de vol. Chaque bielle de pas 20 s'étend longitudinalement selon sa direction d'extension D1 d'une première zone 21 jusqu'à une deuxième zone 22, la première zone 21 et /ou la deuxième zone 22 comprenant un dispositif de liaison à rotule 25. Par exemple, la première zone 21 est articulée à un plateau tournant 8 d'un ensemble de plateaux cycliques 6 éventuellement par un premier dispositif de liaison à rotule 26 et la deuxième zone 22 est articulée à un levier de pas 9 éventuellement par un deuxième dispositif de liaison à rotule 27. Le plateau non tournant 7 est alors commandé par des commandes de vol par exemple via des servocommandes voire d'autres bielles de pas.

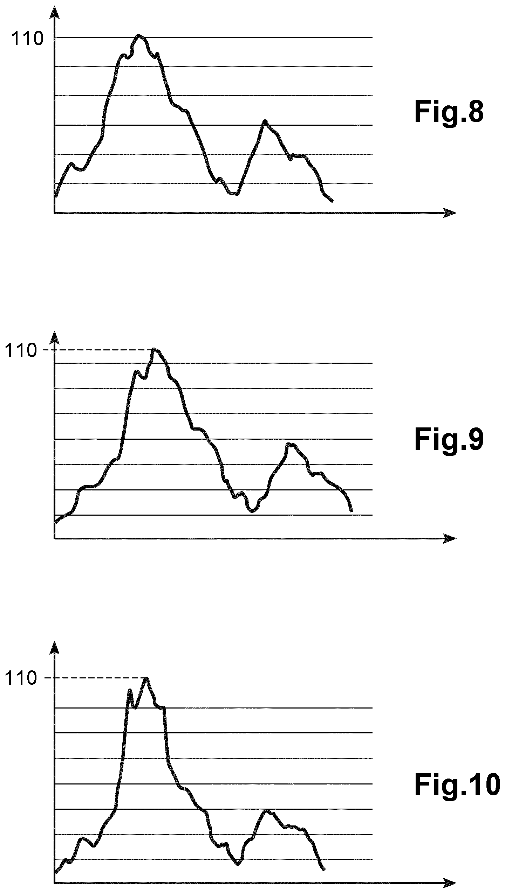

Cet ensemble rotor 5 comporte alors au moins un système de détection 30 selon l'invention pour détecter une usure d'au moins un dispositif de liaison à rotule 25 d'au moins une bielle de pas 20. Les figures 1, 3 à 7 illustrent diverses réalisations non restrictives d'un système de détection 30 selon l'invention, les figures 8 à 16 illustrant au travers de diagrammes un procédé de détection d'usure d'un dispositif de liaison à rotule 25 à l'aide d'un tel système de détection.

Indépendamment de la réalisation, un système de détection 30 comporte au moins un ensemble de mesure 31, et par exemple un ensemble de mesure 31 par pale. Un tel ensemble de mesure 31 est muni d'au moins un sous-ensemble de mesure incluant au moins une jauge de déformation à placer sur une bielle de pas 20 à surveiller.

Un ensemble de mesure 31 peut comporter un sous-ensemble de mesure en traction 32. Ce sous-ensemble de mesure en traction 32 comporte au moins une jauge de déformation en traction 33. Cette jauge de déformation en traction 33 peut s'étendre selon une direction axiale éventuellement apte à être parallèle à une direction d'extension D1 d'une bielle de pas 20 pour se déformer lorsque la bielle de pas 20 est étirée ou comprimée. Par exemple, une telle direction d'extension D1 passe le cas échéant par le centre d'un premier dispositif de liaison à rotule 26 et d'un deuxième dispositif de liaison à rotule 27 de la bielle de pas 20.

Un ensemble de mesure 31 peut comporter au moins un premier sous-ensemble de mesure en flexion 34. Par exemple, ce premier sous-ensemble de mesure en flexion 34 peut comporter au moins deux premières jauges de déformation en flexion 35, 36 agencées autour d'une direction éventuellement apte à être confondue avec la direction d'extension D1.

Un ensemble de mesure 31 peut comporter au moins un deuxième sous-ensemble de mesure en flexion 37. Par exemple, ce deuxième sous-ensemble de mesure en flexion 37 peut comporter au moins deux deuxièmes jauges de déformation en flexion 38,39 agencées autour de la direction d'extension D1 et décalées en azimut par rapport aux premières jauges de déformation 35, 36.

Selon l'exemple représenté, un ensemble de mesure 31 peut ainsi comporter notamment une jauge de déformation en traction 33 ainsi que deux premières jauges de déformation en flexion 35, 36 et deux deuxièmes jauges de déformation en flexion 38, 39.

Selon un autre aspect, le système de détection 30 comprend au moins un circuit électrique de traitement 40 relié à au moins une jauge de déformation 33, 35, 36, 38, 39, et par exemple comporte un circuit électrique de traitement 40 par sous-ensemble de mesure 32, 34, 37. Le ou les circuits électriques de traitement 40 peuvent être portés par une bielle de pas 20 ou peuvent être agencés au sein d'un concentrateur 90 agencé sur la tête rotor.

Par ailleurs, un système de détection 30 comporte au moins une source d'énergie électrique 50, et par exemple comporte un une source d'énergie électrique 50 par sous-ensemble de mesure 32, 34, 37. Le ou les sources d'énergie électrique 50 peuvent être portées par une bielle de pas 20 ou peuvent être agencées au sein d'un concentrateur 90.

Dès lors, chaque circuit électrique de traitement 40 reçoit une énergie électrique pour élaborer un signal de mesure variant en fonction d'une déformation d'une jauge de déformation 33, 35, 36, 38, 39 et en fonction de ladite usure. Par exemple, un circuit électrique de traitement 40 comporte un pont de Wheastone incluant chaque jauge de déformation 33, 35, 36, 38, 39 d'un sous-ensemble de mesure. De plus, le circuit électrique de traitement 40 peut comporter un voltmètre ou équivalent émettant un signal de mesure temporel relatif à une différence de potentiel qui varie au fil du temps en fonction de la déformation des jauges de déformation, cette déformation variant en fonction de l'usure d'un dispositif de liaison à rotule 25. En outre, un circuit électrique de traitement 40 peut par exemple comprendre une mémoire mémorisant le signal de mesure émis.

Par ailleurs, un système de détection 30 comprend au moins un calculateur de surveillance 60 relié par une liaison filaire ou non filaire à au moins un circuit électrique de traitement 40. Par exemple, un système de détection 30 peut comprendre un calculateur de surveillance 60 relié à un unique circuit électrique de traitement 40 et éventuellement porté par une bielle de pas 20, ou un calculateur de surveillance 60 relié à chaque circuit électrique de traitement 40 d'une bielle de pas 20 et éventuellement porté par cette bielle de pas ou encore un calculateur de surveillance 60 agencé dans un concentrateur 90 et relié à au moins un circuit électrique de traitement 40. Un calculateur de surveillance 60 mutualisé ou non peut aussi être agencé en dehors de l'ensemble rotor 5.

Chaque calculateur de surveillance 60 peut comprendre par exemple au moins un processeur ou équivalant, au moins une mémoire, au moins un circuit intégré, au moins un système programmable, et/ ou au moins un circuit logique ces exemples ne limitant pas la portée donnée à l'expression « calculateur de surveillance ».

Chaque calculateur de surveillance 60 est configuré pour traiter au moins un signal de mesure émis par un circuit électrique de traitement 40 afin de déterminer la présence d'une usure impliquant une action de maintenance sur la bielle de pas 20 si le signal de mesure traité par le calculateur de surveillance 60 présente une anomalie prédéterminée.

Eventuellement, un système de détection 30 peut comporter un alerteur 70 en liaison filaire ou non filaire avec au moins un calculateur de surveillance 60. Le calculateur de surveillance 60 transmet un signal à l'alerteur 70 qui génère le cas échéant une alerte lorsqu'un signal de mesure traité présente une anomalie prédéterminée.

Par ailleurs, le système de détection 30 peut comporter une ou plusieurs antennes permettant des liaisons sans fil.

Par exemple, au moins une première antenne 75 est utilisée pour transmettre un signal en dehors de l'ensemble rotor 5. Ainsi, une première antenne 75 peut être reliée à un circuit électrique de traitement 40 pour transmettre un signal de mesure vers un calculateur de surveillance 60 présent en dehors de l'ensemble rotor 5. Selon un autre exemple, au moins une première antenne 75 peut être reliée à un calculateur de surveillance 60 pour transmettre un signal par exemple vers un alerteur 70. Le calculateur de surveillance 60 peut communiquer avec au moins un autre calculateur de surveillance 60 aussi via des antennes.

La figure 2 présente un exemple de réalisation non revendiqué. Selon cet exemple, l'ensemble de mesure 31 est porté directement par la bielle de pas 20, par exemple en lui étant fixé par un moyen d'attache. Chaque jauge de déformation 33, 35, 36, 38, 39 est par exemple collée sur la bielle de pas 20 entre la première zone 21 et la deuxième zone 22 de cette bielle de pas.

Selon cet exemple, chaque sous-ensemble de mesure 32, 34, 37 est relié par une liaison filaire à un circuit électrique de traitement 40. Ce circuit électrique de traitement 40 est aussi par exemple collé sur la bielle de pas 20. Alternativement, il peut être agencé dans un concentrateur solidaire en rotation de l'ensemble rotor 5.

Selon cet exemple, chaque circuit électrique de traitement 40 est relié à une ou plusieurs sources d'énergie électrique éventuellement collées sur la bielle de pas 20 ou agencées dans un concentrateur 90 solidaire en rotation de l'ensemble rotor 5.

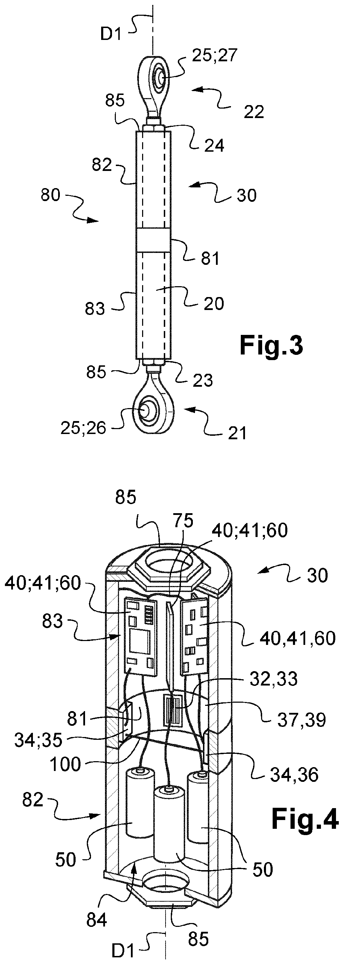

La figure 3 présente un autre exemple de réalisation revendiqué.

Selon cet exemple, un système de détection 30 comporte au moins un porteur 80, et par exemple un porteur 80 par bielle de pas. Ce porteur 80 est creux en son centre pour entourer un tronçon de la bielle de pas 20. Le porteur 80 peut être enfilé sur la bielle de pas 20 ou peut comprendre des éléments à fixer les uns aux autres comme par exemple deux demi-coquilles à visser l'une à l'autre.

Le porteur 80 peut être muni d'un dispositif 85 de fixation pour être fixé à la bielle de pas 20 à surveiller. Un tel dispositif 85 de fixation peut inclure des butées haute et basse destinées à être coincées entre deux écrous 23, 24 de la bielle de pas, des systèmes vis/écrou...

Par ailleurs, le porteur 80 possède un tronçon de mesure 81 déformable élastiquement pour éventuellement amplifier des déformations de la bielle de pas. Par exemple, ce tronçon de mesure 81 comporte un anneau en élastomère. Le tronçon de mesure 81 porte un ensemble de mesure 31, chaque jauge de déformation de l'ensemble de mesure 31 étant accolé au tronçon de mesure ou noyé dans le tronçon de mesure 81 par exemple.

En référence à la figure 4, le tronçon de mesure 81 peut ne pas être en contact avec la bielle de pas 20, du moins au repos à savoir en l'absence d'une déformation de la bielle de pas. Par exemple ce tronçon de mesure 81 entoure un espace 84 creux traversé par la bielle de pas 20 sans être en contact avec la bielle de pas 20. Selon l'exemple représenté, le tronçon de mesure 81 présente un diamètre interne 100 supérieur à un diamètre externe d'un tronçon de la bielle de pas 20 entouré par le tronçon de mesure 81.

Eventuellement, le tronçon de mesure 81 est agencé longitudinalement, à savoir selon la direction d'extension D1 longitudinal de la bielle de pas 20, entre deux tronçons 82, 83 rigides à fixer à la bielle de pas 20.

Par exemple, le porteur 80 peut comporter un tronçon équipé d'au moins une source d'énergie électrique 50 pour être autonome énergétiquement et/ou d'au moins un circuit électrique de traitement 40 et/ou d'au moins un calculateur de surveillance 60 et/ou d'au moins une antenne 75. Selon un exemple, un tel tronçon peut être le tronçon de mesure.

Selon l'exemple représenté, un premier tronçon 82 porte une source d'énergie électrique 50 par sous-ensemble de mesure. De plus, un deuxième tronçon 83 porte au moins un circuit électrique de traitement 40 et/ou au moins un calculateur de surveillance 60 et/ou au moins une antenne 75, le tronçon de mesure 81 étant disposé entre le premier tronçon 82 et le deuxième tronçon 83.

Selon cet exemple, le porteur 80 comporte notamment une carte électronique 41 par sous-ensemble de mesure soit trois cartes électroniques 41 pour respectivement un sous-ensemble de mesure en traction 32 ainsi que pour le premier sous-ensemble de mesure en flexion 34 et le deuxième sous-ensemble de mesure en flexion 37.

Dès lors, chaque carte électronique 41 comprend un circuit électrique de traitement 40 relié par une liaison filaire à chaque jauge de déformation du sous-ensemble de mesure associé et à une source d'énergie 50. De plus, la carte électronique 41 peut porter un calculateur de surveillance 60 relié au circuit électrique de traitement 40 par une liaison filaire.

En outre, les calculateurs de surveillance 60 peuvent être reliés à une même première antenne 75 et/ou à des antennes respectives.

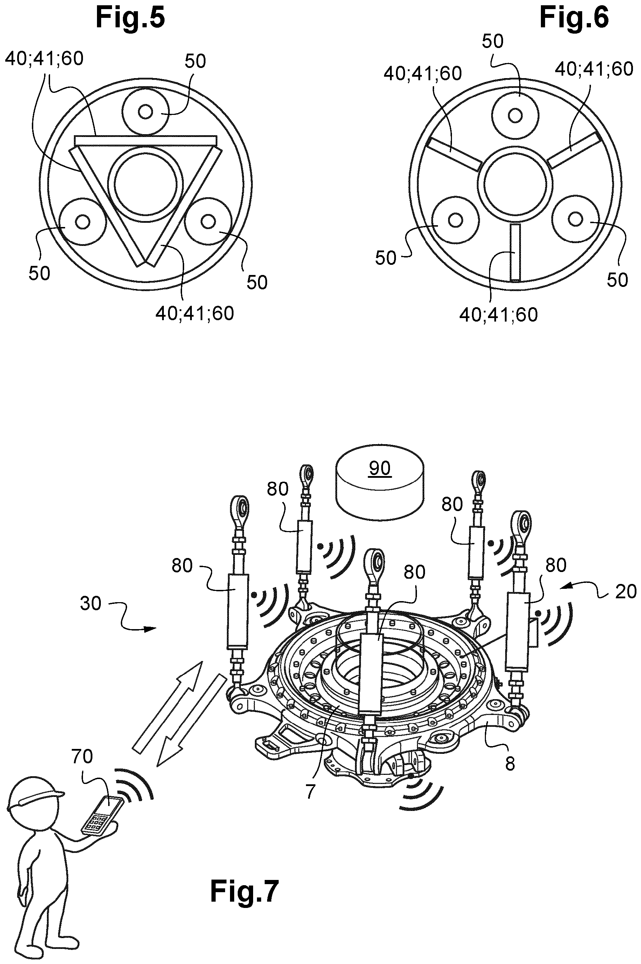

En référence aux figures 5, 6, les sources d'énergie électrique 50 et les cartes électroniques peuvent être positionnées de manière à équilibrer le porteur 80 afin que ce porteur 80 ne soit pas dimensionnant pour la bielle de pas 20.

La figure 7 présente un ensemble rotor 5 comprenant des bielles de pas 20 munis de porteurs 80. Eventuellement, les porteurs 80 peuvent être dépourvus de calculateurs de surveillance, les divers circuits électriques de traitement 40 étant reliés par des connexions filaires ou non filaires à au moins un calculateur de surveillance d'un concentrateur 90. Eventuellement, les porteurs 80 peuvent être dépourvus de sources d'énergie électrique, les divers circuits électriques de traitement 40 étant reliés par des connexions filaires à des sources d'énergie électrique 50 d'un concentrateur 90.

Les figures 8 à 16 illustrent des procédés mis en oeuvre par un système de détection selon l'invention au travers de divers diagrammes.

En particulier, les figures 8 à 10 illustrent la détection d'une usure d'un dispositif de liaison à rotule 25 à l'aide d'un signal de mesure temporel émis par un circuit électrique de traitement 40 à partir d'une jauge de déformation en traction 33.

Selon ce procédé, le circuit électrique de traitement émet de manière usuelle un signal électrique prenant la forme d'un signal de mesure temporel de traction qui varie au fil du temps en fonction de la déformation en traction et/ou en compression de la jauge de déformation en traction 33.

Ce signal de mesure temporel peut éventuellement être traité par des méthodes usuelles d'échantillonnage voire en effectuant une moyenne sur un nombre prédéterminé de tours de l'ensemble rotor 5.

La phase de vol courante de l'aéronef 1 est de plus déterminée par des instruments usuels.

La phase de vol courante et le signal de mesure temporel sont éventuellement mémorisés dans une mémoire voire traités par un calculateur de surveillance 60.

La figure 8 illustre le signal de mesure temporel obtenu sur un tour avec une bielle de pas saine durant une phase de vol en palier. La figure 9 illustre le signal de mesure temporel obtenu sur un tour avec une bielle de pas présentant un dispositif de liaison à rotule ayant une usure acceptable durant une phase de vol en palier. La figure 10 illustre le signal de mesure temporel obtenu sur un tour avec une bielle de pas présentant un dispositif de liaison à rotule ayant une usure devant impliquée une action de maintenance durant une phase de vol en palier. Les figures 8 à 10 comprennent ainsi des diagrammes présentant le temps en abscisse et par exemple une différence de potentiel en ordonnée, chaque courbe représentant un signal de mesure ayant une différence de potentiel qui varie en fonction du temps.

Un opérateur peut constater visuellement un défaut en observant l'amplitude maximale 110 du signal de mesure temporel. Plus un dispositif de liaison à rotule est usé, plus cette amplitude maximale 110 est élevée. Un seuil image d'une usure impliquant une action de maintenance peut ainsi être établi.

Ainsi, lorsque l'aéronef 1 est dans une phase de vol en palier, le procédé peut comporter une étape de détection d'une usure impliquant le remplacement du dispositif de liaison à rotule 25 lorsque le signal de mesure temporel de traction présente une amplitude erronée, par exemple une amplitude supérieure ou égale à un seuil ou différente des amplitudes signaux de mesure provenant des autres bielles de pas. Cette analyse peut être réalisée visuellement par un opérateur ou automatiquement par un calculateur de surveillance.

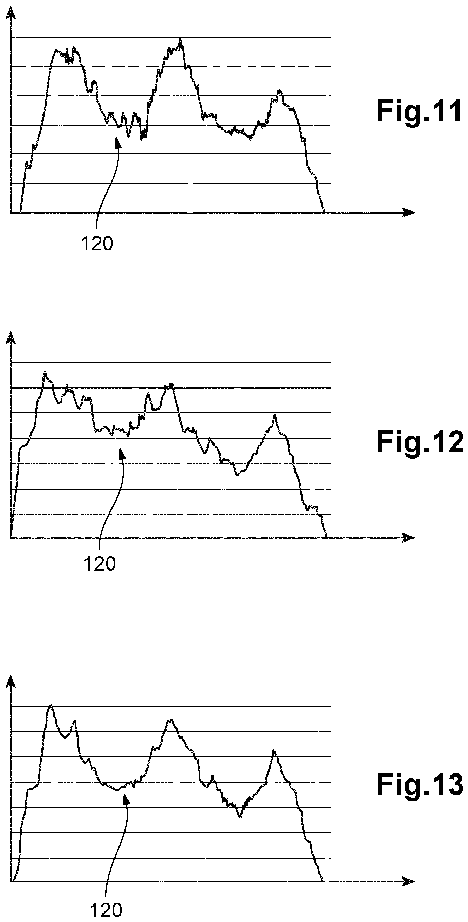

La figure 11 illustre le signal de mesure temporel obtenu sur un tour avec une jauge de déformation en traction sur une bielle de pas saine durant une phase de vol en approche. La figure 12 illustre le signal de mesure temporel obtenu sur un tour avec une jauge de déformation en traction sur une bielle de pas présentant un dispositif de liaison à rotule ayant une usure acceptable durant une phase de vol en approche. La figure 13 illustre le signal de mesure temporel obtenu sur un tour avec une jauge de déformation en traction sur une bielle de pas présentant un dispositif de liaison à rotule ayant une usure devant impliquée une action de maintenance durant une phase de vol en approche.

Un opérateur peut constater visuellement un défaut en observant l'allure du signal de mesure temporel. Plus un dispositif de liaison à rotule est usé, plus le signal est « lissé », comme le montre l'observation des segments 120 des signaux visibles sur les figures 11 à 13. La présence d'un jeu dans un dispositif de liaison à rotule tend en effet à filtrer une partie des vibrations d'une bielle de pas induites par les modes propres de vibrations de la pale reliée à la bielle de pas et des ensembles dynamiques inférieurs.

Afin de réaliser un traitement automatisé, lorsque l'aéronef 1 est dans une phase de vol d'approche, le calculateur de surveillance traite le signal de mesure temporel de traction au moins en effectuant une transformation de Fourier pour obtenir un signal de mesure traité.

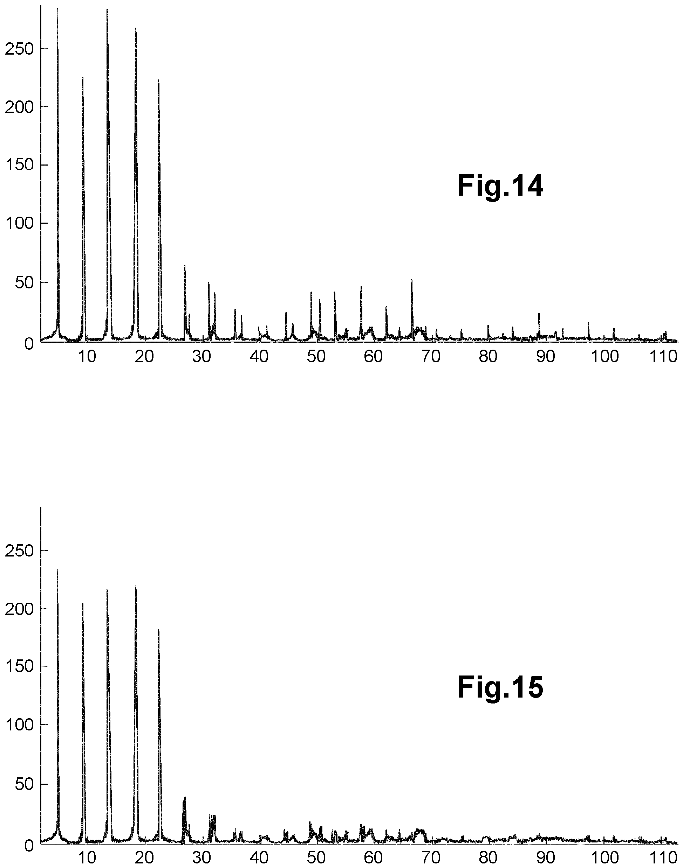

Les figures 14 et 15 illustrent un tel signal de mesure traité. Cette figure 15 présente ainsi un diagramme comprenant des fréquences en abscisse et des énergies en ordonnée. Des composantes fréquentielles du signal de mesure traité présentent des amplitudes qui diminuent sur la figure 15 lorsqu'au moins un dispositif de liaison à rotule présente une usure impliquant une action de maintenance.

Dès lors, le calculateur de surveillance peut détecter une usure impliquant le remplacement du dispositif de liaison à rotule 25 lorsque le signal traité présente à une fréquence prédéterminée ou dans une plage prédéterminée de fréquences, une ou plusieurs composantes fréquentielles ayant une amplitude qui devient inférieure à un seuil de traction en approche ou en palier.

Lorsqu'au moins une jauge de déformation est une jauge de déformation en flexion 35, 36, 38, 39, le circuit électrique de traitement émet de manière usuelle un signal électrique prenant la forme d'un signal de mesure temporel de flexion qui varie en fonction de la déformation de la jauge de déformation

Ce signal de mesure temporel peut éventuellement être traité par des méthodes usuelles d'échantillonnage voire en effectuant une moyenne sur un nombre prédéterminé de tours de l'ensemble rotor 5.

Le signal de mesure temporel est éventuellement mémorisé dans une mémoire.

Ensuite, un calculateur de surveillance peut traiter le signal de mesure temporel de flexion au moins en effectuant une transformation de Fourier pour obtenir un signal de mesure en flexion traité.

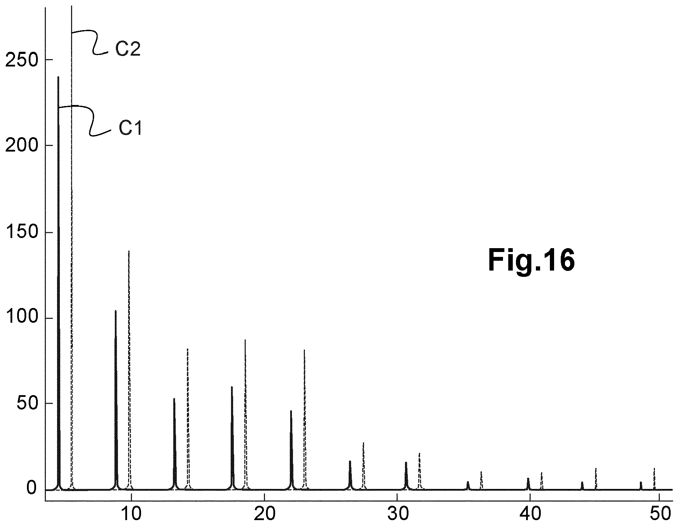

La figure 16 présente une première courbe C1 qui illustre un tel signal de mesure en flexion traité émis à partir d'une bielle de pas saine et une deuxième courbe C2 qui illustre un tel signal de mesure en flexion traité émis à partir d'une bielle de pas ayant un dispositif de liaison à rotule usé. En présence d'une usure de nombreuses composantes fréquentielles présentent une amplitude augmentée.

Dès lors, le calculateur de surveillance peut détecter une usure impliquant le remplacement du dispositif de liaison à rotule 25 lorsque le signal de mesure en flexion traité présente une composante fréquentielle à une fréquence prédéterminée ou dans une plage prédéterminée de fréquences ayant une amplitude qui devient supérieure à un seuil en flexion.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention tel que défini par les revendications

## Revendications

1. Système de détection (30) configuré pour détecter une usure d'un dispositif de liaison à rotule (25) d'une bielle de pas (20) d'un ensemble rotor (5), tel que ledit système de détection (30) comporte au moins un ensemble de mesure (31), ledit au moins un ensemble de mesure (31) ayant au moins une jauge de déformation (33, 35, 36, 38, 39) à placer sur ladite bielle de pas (20), ledit système de détection (30) comprenant au moins un circuit électrique de traitement (40) relié à au moins une dite jauge de déformation (33, 35, 36, 38, 39) et à au moins une source d'énergie électrique (50), ledit circuit électrique de traitement (40) étant configuré pour élaborer un signal de mesure variant en fonction d'une déformation de ladite au moins une jauge de déformation (33, 35, 36, 38, 39) et en fonction de ladite usure, ledit système de détection (30) comportant un porteur (80), ledit porteur (80) étant muni d'un dispositif (85) de fixation à la bielle de pas à surveiller, ledit porteur (80) comportant un tronçon de mesure (81) déformable élastiquement portant un dit ensemble de mesure (31) et au moins deux tronçons (82, 83) rigides à fixer à la bielle de pas (20), ledit tronçon de mesure (81) entourant un espace (84) creux configuré pour être traversé par ladite bielle de pas (20) sans être en contact avec la bielle de pas (20), ledit tronçon de mesure (81) étant agencé longitudinalement entre lesdits deux tronçons (82, 83) rigides à fixer à la bielle de pas (20), ledit système de détection (30) comprenant un calculateur de surveillance (60) en communication avec ledit au moins un circuit électrique de traitement (40), le calculateur de surveillance (60) étant configuré pour traiter ledit signal de mesure et déterminer la présence d'une dite usure impliquant une action de maintenance sur ladite bielle de pas (20) lorsque ledit signal de mesure traité par le calculateur de surveillance (60) présente une anomalie prédéterminée.

2. Système de détection selon la revendication 1,
**caractérisé en ce que** ledit système de détection (30) comporte un alerteur (70) en communication avec ledit calculateur de surveillance (60), ledit calculateur de surveillance (60) étant configuré pour commander l'alerteur (70) afin de signaler une usure lorsque ledit signal de mesure traité présente ladite anomalie prédéterminée.

3. Système de détection selon l'une quelconque des revendications 1 à 2,
**caractérisé en ce que** ledit système de détection (30) comporte au moins une première antenne (75) pour transmettre en dehors de l'ensemble rotor (5) le signal de mesure ou un signal émis par un calculateur de surveillance (60) qui est relié à un circuit électrique de traitement (40), ladite première antenne (75) étant reliée au circuit électrique de traitement (40) ou au calculateur de surveillance (60).

4. Système de détection selon l'une quelconque des revendications 1 à 3,
**caractérisé en ce que** lesdits deux tronçons comportent un premier tronçon (82) comportant ladite au moins une source d'énergie électrique (50) et un deuxième tronçon (83) comprenant ledit au moins un circuit électrique de traitement (40).

5. Système de détection selon l'une quelconque des revendications 1 à 4,
**caractérisé en ce que** le tronçon de mesure comporte au moins une dite source d'énergie ou un dit circuit électrique de traitement.

6. Système de détection selon l'une quelconque des revendications 1 à 5,
**caractérisé en ce que** ledit système de détection (30) comprend une pluralité d'ensembles de mesure (31), chaque ensemble de mesure (31) étant relié à un concentrateur (90) par une liaison filaire ou non filaire, ledit concentrateur (90) comprenant au moins ledit circuit électrique de traitement (40).

7. Système de détection selon l'une quelconque des revendications 1 à 6,
**caractérisé en ce que** ledit au moins un ensemble de mesure (31) comporte au moins une jauge de déformation en traction (33) s'étendant selon une direction axiale apte à être parallèle à une direction d'extension (D1) d'une bielle de pas (20).

8. Système de détection selon l'une quelconque des revendications 1 à 7,
**caractérisé en ce que** ledit au moins un ensemble de mesure (31) comporte au moins deux premières jauges de déformation en flexion (35, 36) agencées autour d'une direction apte à être confondue avec une direction d'extension (D1) d'une bielle de pas (20).

9. Système de détection selon l'une quelconque des revendications 1 à 8,
**caractérisé en ce que** ledit au moins un ensemble de mesure (31) comporte au moins cinq dites jauges de déformation qui comprennent une jauge de déformation en traction (33) ainsi qu'au moins deux premières jauges de déformation en flexion (35, 36) agencées autour d'un axe et au moins deux deuxièmes jauges de déformation en flexion (38, 39) agencées autour dudit axe, lesdites deux premières jauges de déformation en flexion (35, 36) et lesdites deux deuxièmes jauges de déformation en flexion (38, 39) étant décalées en azimut autour de cet axe.

10. Ensemble rotor (5) muni d'une pluralité de pales (10) et de bielles de pas (20), chaque bielle de pas (20) s'étendant longitudinalement d'une première zone (21) jusqu'à une deuxième zone (22), au moins une desdites première zone (21) et deuxième zone (22) comprenant un dispositif de liaison à rotule (25),
**caractérisé en ce que** ledit ensemble rotor (5) comporte au moins un système de détection (30) selon l'une quelconque des revendications 1 à 9, chaque bielle de pas portant un dit ensemble de mesure.

11. Aéronef (1),
**caractérisé en ce que** ledit aéronef (1) comporte un ensemble rotor (5) selon la revendication 10.

12. Procédé de détection pour détecter une usure d'un dispositif de liaison à rotule (25) d'une bielle de pas (20) d'un ensemble rotor (5) d'un aéronef (1), ledit ensemble rotor (5) étant muni d'une pluralité de pales (10) et de bielles de pas (20), chaque bielle de pas (20) s'étendant longitudinalement d'une première zone (21) jusqu'à une deuxième zone (22), au moins une desdites première zone (21) et deuxième zone (22) comprenant un dispositif de liaison à rotule (25), ledit ensemble rotor (5) comprenant au moins un système de détection (30) selon l'une quelconque des revendications 1 à 9, au moins une jauge de déformation étant une jauge de déformation en traction (33) disposée pour mesurer une déformation selon une direction d'extension de la bielle de pas (20), le procédé comporte les étapes suivantes :
- établissement d'un signal de mesure temporel de traction en mesurant une déformation de la bielle de pas (20) avec la jauge de déformation en traction (33),
- évaluation d'une phase de vol courante de l'aéronef (1),
- lorsque l'aéronef (1) vole dans une phase de vol en palier, détection d'une usure impliquant le remplacement du dispositif de liaison à rotule (25) lorsque le signal de mesure temporel de traction présente une amplitude erronée et/ou lorsque l'aéronef (1) est dans une phase de vol d'approche, établissement d'un signal de mesure traité au moins en effectuant une transformation de Fourrier du signal de mesure temporel de traction et détection d'une usure impliquant le remplacement du dispositif de liaison à rotule (25) lorsque le signal traité présente au moins une composante fréquentielle à une fréquence prédéterminée ou dans une plage prédéterminée de fréquences ayant une amplitude qui devient inférieure à un seuil de traction en approche.

13. Procédé de détection pour détecter une usure d'un dispositif de liaison à rotule (25) d'une bielle de pas (20) d'un ensemble rotor (5) d'un aéronef (1), ledit ensemble rotor (5) étant muni d'une pluralité de pales (10) et de bielles de pas (20), chaque bielle de pas (20) s'étendant longitudinalement d'une première zone (21) jusqu'à une deuxième zone (22), au moins une desdites première zone (21) et deuxième zone (22) comprenant un dispositif de liaison à rotule (25), ledit ensemble rotor (5) comprenant au moins un système de détection (30) selon l'une quelconque des revendications 1 à 9, au moins une jauge de déformation étant une jauge de déformation en flexion (35, 36, 38, 39) disposée pour mesurer une déformation en flexion de la bielle de pas, le procédé comporte les étapes suivantes :
- établissement d'un signal de mesure temporel de flexion en mesurant une déformation de la bielle de pas (20) avec la jauge de déformation en flexion (35, 36, 38, 39),
- établissement d'un signal de mesure traité au moins en effectuant une transformation de Fourrier du signal de mesure temporel de flexion et détection d'une usure impliquant le remplacement du dispositif de liaison à rotule (25) lorsque le signal de mesure traité présente au moins une composante fréquentielle à une fréquence prédéterminée ou dans une plage prédéterminée de fréquences ayant une amplitude qui devient supérieure à un seuil en flexion.

## Patentansprüche

1. Erfassungssystem (30), das konfiguriert ist, um Verschleiß an einer Kugelgelenkvorrichtung (25) einer Blattverstellstange (20) einer Rotorbaugruppe (5) zu erfassen, wobei das Erfassungssystem (30) mindestens eine Messanordnung (31) umfasst, wobei die mindestens eine Messanordnung (31) mindestens einen Verformungsmesser (33, 35, 36, 38, 39) zur Anbringung an der Blattverstellstange (20) aufweist, wobei das Erfassungssystem (30) mindestens eine elektrische Verarbeitungsschaltung (40) umfasst, die mit dem mindestens einen Verformungsmesser (33, 35, 36, 38, 39) und mit mindestens einer elektrischen Energiequelle (50) verbunden ist, wobei die elektrische Verarbeitungsschaltung (40) konfiguriert ist, um ein Messsignal zu erzeugen, das sich in Abhängigkeit von einer Verformung des mindestens einen Verformungsmessers (33, 35, 36, 38, 39) und in Abhängigkeit von dem Verschleiß ändert, wobei das Erfassungssystem (30) einen Träger (80) umfasst, und der Träger (80) mit einer Vorrichtung (85) zur Befestigung an der zu überwachenden Blattverstellstange versehen ist, wobei der Träger (80) einen elastisch verformbaren Messabschnitt (81), der eine besagte Messanordnung (31) trägt, und mindestens zwei starre Abschnitte (82, 83) zur Befestigung an der Blattverstellstange (20) umfasst, der Messabschnitt (81) einen Hohlraum (84) umgibt, der konfiguriert ist, um von der Blattverstellstange (20) durchlaufen zu werden, ohne die Blattverstellstange (20) zu berühren, wobei der Messabschnitt (81) longitudinal zwischen den beiden starren, an der Blattverstellstange (20) zu befestigenden Abschnitten (82, 83) angeordnet ist, wobei das Erfassungssystem (30) einen Überwachungsrechner (60) in Kommunikation mit der mindestens einen elektrischen Verarbeitungsschaltung (40) umfasst, wobei der Überwachungsrechner (60) konfiguriert ist, um das Messsignal zu verarbeiten und das Vorliegen eines besagten Verschleißes festzustellen, der eine Wartungsmaßnahme an der Blattverstellstange (20) impliziert, wenn das von dem Überwachungsrechner (60) verarbeitete Messsignal eine vorgegebene Anomalie aufweist.

2. Erfassungssystem nach Anspruch 1,
**dadurch gekennzeichnet, dass** das Erfassungssystem (30) einen Alarmgeber (70) in Kommunikation mit dem Überwachungsrechner (60) umfasst, wobei der Überwachungsrechner (60) konfiguriert ist, um den Alarmgeber (70) zum Melden von Verschleiß anzusteuern, wenn das verarbeitete Messsignal die vorgegebene Anomalie aufweist.

3. Erfassungssystem nach einem der Ansprüche 1 bis 2,
**dadurch gekennzeichnet, dass** das Erfassungssystem (30) mindestens eine erste Antenne (75) zum Übertragen des Messsignals oder eines von einem mit einer elektrischen Verarbeitungsschaltung (40) verbundenen Überwachungsrechner (60) gesendeten Signals nach außerhalb der Rotorbaugruppe (5) aufweist, wobei die erste Antenne (75) mit der elektrischen Verarbeitungsschaltung (40) oder dem Überwachungsrechner (60) verbunden ist.

4. Erfassungssystem nach einem der Ansprüche 1 bis 3,
**dadurch gekennzeichnet, dass** die beiden Abschnitte einen ersten Abschnitt (82) mit der mindestens einen elektrischen Energiequelle (50) und einen zweiten Abschnitt (83) mit der mindestens einen elektrischen Verarbeitungsschaltung (40) umfassen.

5. Erfassungssystem nach einem der Ansprüche 1 bis 4,
**dadurch gekennzeichnet, dass** der Messabschnitt mindestens eine besagte Energiequelle oder eine besagte elektrische Verarbeitungsschaltung umfasst.

6. Erfassungssystem nach einem der Ansprüche 1 bis 5,
**dadurch gekennzeichnet, dass** das Erfassungssystem (30) eine Mehrzahl von Messanordnungen (31) umfasst, wobei jede Messanordnung (31) über eine drahtgebundene oder nicht drahtgebundene Verbindung mit einem Konzentrator (90) verbunden ist, wobei der Konzentrator (90) mindestens die elektrische Verarbeitungsschaltung (40) umfasst.

7. Erfassungssystem nach einem der Ansprüche 1 bis 6,
**dadurch gekennzeichnet, dass** die mindestens eine Messanordnung (31) mindestens einen Zugverformungsmesser (33) umfasst, der sich in einer axialen Richtung erstreckt, die geeignet ist, parallel zu einer Erstreckungsrichtung (D1) einer Blattverstellstange (20) zu sein.

8. Erfassungssystem nach einem der Ansprüche 1 bis 7,
**dadurch gekennzeichnet, dass** die mindestens eine Messanordnung (31) mindestens zwei erste Biegeverformungsmesser (35, 36) umfasst, die um eine Richtung herum angeordnet sind, die geeignet ist, mit einer Erstreckungsrichtung (D1) einer Blattverstellstange (20) zusammenzufallen.

9. Erfassungssystem nach einem der Ansprüche 1 bis 8,
**dadurch gekennzeichnet, dass** die mindestens eine Messanordnung (31) mindestens fünf besagte Verformungsmesser umfasst, darunter ein Zugverformungsmesser (33) sowie mindestens zwei erste Biegeverformungsmesser (35, 36), die um eine Achse herum angeordnet sind, und mindestens zwei zweite Biegeverformungsmesser (38, 39), die um die Achse herum angeordnet sind, wobei die beiden ersten Biegeverformungsmesser (35, 36) und die beiden zweiten Biegeverformungsmesser (38, 39) um diese Achse herum azimutal versetzt sind.

10. Rotorbaugruppe (5) mit einer Mehrzahl von Blättern (10) und Blattverstellstangen (20), wobei sich jede Blattverstellstange (20) in Längsrichtung von einem ersten Bereich (21) zu einem zweiten Bereich (22) erstreckt, wobei mindestens einer der ersten (21) und zweiten (22) Bereiche eine Kugelgelenkvorrichtung (25) umfasst,
**dadurch gekennzeichnet, dass** die Rotorbaugruppe (5) mindestens ein Erfassungssystem (30) nach einem der Ansprüche 1 bis 9 aufweist, wobei jede Blattverstellstange eine so genannte Messanordnung trägt.

11. Luftfahrzeug (1),
**dadurch gekennzeichnet, dass** das Luftfahrzeug (1) eine Rotorbaugruppe (5) nach Anspruch 10 aufweist.

12. Erfassungsverfahren zum Erfassen von Verschleiß an einer Kugelgelenkvorrichtung (25) einer Blattverstellstange (20) einer Rotorbaugruppe (5) eines Luftfahrzeugs (1), wobei die Rotorbaugruppe (5) mit einer Mehrzahl von Blättern (10) und Blattverstellstangen (20) versehen ist, wobei sich jede Blattverstellstange (20) in Längsrichtung von einem ersten Bereich (21) bis zu einem zweiten Bereich (22) erstreckt, wobei von dem ersten Bereich (21) und dem zweiten Bereich (22) mindestens eine eine Kugelgelenkvorrichtung (25) umfasst, wobei die Rotorbaugruppe (5) mindestens ein Erfassungssystem (30) nach einem der Ansprüche 1 bis 9 umfasst, wobei mindestens ein Verformungsmesser ein Zugverformungsmesser (33) ist, der angeordnet ist, um eine Verformung entlang einer Erstreckungsrichtung der Blattverstellstange (20) zu messen, wobei das Verfahren die folgenden Schritte umfasst:
- Erstellen eines zeitlichen Zugmesssignals durch Messen einer Verformung der Blattverstellstange (20) mit dem Zugverformungsmesser (33),
- Auswerten einer aktuellen Flugphase des Luftfahrzeugs (1),
- wenn das Luftfahrzeug (1) in einer Horizontalflugphase fliegt, Erkennen von Verschleiß, der den Austausch der Kugelgelenkvorrichtung (25) impliziert, wenn das zeitliche Zugmesssignal eine falsche Amplitude aufweist und/ oder wenn sich das Luftfahrzeug (1) in einer Anflugphase befindet, Erzeugen eines verarbeiteten Messsignals, indem zumindest eine Fourier-Transformation des zeitlichen Zugmesssignals durchgeführt wird, und Erfassen von Verschleiß, der den Austausch der Kugelgelenkvorrichtung (25) impliziert, wenn das verarbeitete Signal zumindest eine Frequenzkomponente bei einer vorgegebenen Frequenz oder in einem vorgegebenen Frequenzbereich aufweist, die eine Amplitude hat, die unter einen Schwellenwert für den Zug im Anflug fällt.

13. Erfassungsverfahren zum Erfassen von Verschleiß an einer Kugelgelenkvorrichtung (25) einer Blattverstellstange (20) einer Rotorbaugruppe (5) eines Luftfahrzeugs (1), wobei die Rotorbaugruppe (5) mit einer Mehrzahl von Blättern (10) und Blattverstellstangen (20) versehen ist, wobei sich jede Blattverstellstange (20) in Längsrichtung von einem ersten Bereich (21) bis zu einem zweiten Bereich (22) erstreckt, wobei von dem ersten Bereich (21) und dem zweiten Bereich (22) mindestens einer eine Kugelgelenkvorrichtung (25) umfasst, wobei die Rotorbaugruppe (5) mindestens ein Erfassungssystem (30) nach einem der Ansprüche 1 bis 9 umfasst, wobei mindestens ein Verformungsmesser ein Biegeverformungsmesser (35, 36, 38, 39) ist, der eingerichtet ist, um eine Biegeverformung der Blattverstellstange zu messen, wobei das Verfahren die folgenden Schritte umfasst:
- Erstellen eines zeitlichen Biegemesssignals durch Messen einer Verformung der Blattverstellstange (20) mit dem Biegeverformungsmesser (35, 36, 38, 39),
- Erstellen eines verarbeiteten Messsignals, indem zumindest eine Fourier-Transformation des zeitlichen Biegemesssignals durchgeführt wird, und Erkennen von Verschleiß, der den Austausch der Kugelgelenkvorrichtung (25) impliziert, wenn das verarbeitete Messsignal bei einer vorgegebenen Frequenz oder in einem vorgegebenen Frequenzbereich zumindest eine Frequenzkomponente aufweist, die eine Amplitude hat, die größer als ein Biegeschwellenwert wird.

## Claims

1. Detection system (30) for detecting wear of a ball-joint connection device (25) of a pitch rod (20) of a rotor assembly (5),
**characterised in that** said detection system (30) includes at least one measurement assembly (31), said at least one measurement assembly (31) having at least one deformation gauge (33, 35, 36, 38, 39) for placing on said pitch rod (20), said detection system (30) comprising at least one electrical conditioning circuit (40) connected to at least one said deformation gauge (33, 35, 36, 38, 39) and to at least one electrical energy source (50), said electrical conditioning circuit (40) being configured to generate a measurement signal that varies as a function of deformation of said at least one deformation gauge (33, 35, 36, 38, 39) and as a function of said wear, said detection system (30) including a carrier (80), said carrier (80) being provided with a fastener device (85) for fastening to the pitch rod that is to be monitored, said carrier (80) including an elastically deformable measurement segment (81) carrying a said measurement assembly (31) and at least two rigid segments (82, 83) for fastening to the pitch rod (20), said measurement segment (81) surrounding a hollow space (84) configured to have said pitch rod (20) passing therethrough without being in contact with the pitch rod (20), said measurement segment (81) being arranged longitudinally between said two rigid segments (82, 83) for fastening to the pitch rod (20), said detection system (30) comprising monitoring calculation means (60) in communication with said at least one electrical conditioning circuit (40), the monitoring calculation means (60) being configured to process said measurement signal and to determine whether said wear is present to a degree that requires maintenance action on said pitch rod (20) when said measurement signal as processed by the monitoring calculation means (60) presents a predetermined anomaly.

2. Detection system according to claim 1,
**characterised in that** said detection system (30) includes warning means (70) in communication with said monitoring calculation means (60), said monitoring calculation means (60) being configured to control the warning means (70) in order to signal the presence of wear when said measurement signal as processed presents the predetermined anomaly.

3. Detection system according to any one of claims 1 to 2,
**characterised in that** said detection system (30) includes at least a first antenna (75) for transmitting away from the rotor assembly (5) either the measurement signal or else a signal emitted by a monitoring calculation means (60) connected to an electrical conditioning circuit (40), said first antenna being connected to the electrical conditioning circuit (40) or to the monitoring calculation means (60).

4. Detection system according to any of claims 1 to 3,
**characterised in that** said two segments comprise a first segment (82) including said at least one electrical energy source (50) and a second segment (83) including said at least one electrical conditioning circuit (40).

5. Detection system according to any of claims 1 to 4,
**characterised in that** the measurement segment includes at least one said energy source or one said electrical conditioning circuit.

6. Detection system according to any one of claims 1 to 5,
**characterised in that** said detection system (30) comprises a plurality of measurement assemblies (31), each measurement assembly (31) being connected to a concentrator (90) by a wired or wireless connection, said concentrator (90) comprising at least said electrical conditioning circuit (40).

7. Detection system according to any one of claims 1 to 6,
**characterised in that** said least one measurement assembly (31) include at least one traction deformation gauge (33) extending along an axial direction suitable for being parallel to an extension direction (D1) of a pitch rod (20).

8. Detection system according to any one of claims 1 to 7,
**characterised in that** said at least one measurement assembly (31) includes at least two first bending deformation gauges (35, 36) arranged around a direction suitable for coinciding with an extension direction (D1) of a pitch rod (20).

9. Detection system according to any one of claims 1 to 8,
**characterised in that** said at least one measurement assembly (31) includes at least five deformation gauges comprising a traction deformation gauge (33) together with at least two first bending deformation gauges (35, 36) arranged around an axis and at least two second bending deformation gauges (38, 39) arranged around said axis, said two first bending deformation gauges (35, 36) and said two second bending deformation gauges (38, 39) being offset in azimuth around said axis.

10. Rotor assembly (5) provided with a plurality of blades (10) and of pitch rods (20), each pitch rod (20) extending longitudinally from a first zone (21) to a second zone (22), at least one of said first and second zones (21, 22) including a ball-joint connection device (25),
**characterised in that** said rotor assembly (5) includes at least one detection system (30) according to any one of claims 1 to 9, with each pitch rod carrying a measurement assembly.

11. Aircraft (1),
**characterised in that** said aircraft (1) includes a rotor assembly (5) according to claim 10.

12. Detection method for detecting wear of a ball-joint connection device (25) of a pitch rod (20) of a rotor assembly (5) of an aircraft (1), said rotor assembly (5) being provided with a plurality of blades (10) and of pitch rods (20), each pitch rod (20) extending longitudinally from a first zone (21) to a second zone (22), at least one of said first and second zones (21, 22) comprising a ball-joint connection device (25), said rotor assembly (5) including at least one detection system (30) according to any one of claims 1 to 9, at least one deformation gauge being a traction deformation gauge (33) arranged to measure deformation along an extension direction of the pitch rod (20), said method comprising the following steps:
- establishing a time-varying traction measurement signal by measuring deformation of the pitch rod (20) with the traction deformation gauge (33);
- evaluating a current stage of flight of the aircraft (1),
- while the aircraft (1) is flying in a level stage of flight, detecting wear to a degree that requires replacement of the ball-joint connection device (25) when the time-varying traction measurement signal presents an erroneous amplitude, and/or while the aircraft (1) is in an approach stage of flight, establishing a processed measurement signal at least by performing a Fourier transform on the time-varying traction measurement signal and detecting a degree of wear that requires replacement of the ball-joint connection device (25) when the processed measurement signal presents, at a predetermined frequency or in a predetermined range of frequencies, at least one frequency component that has an amplitude that drops below a traction threshold during an approach.

13. Detection method for detecting wear of a ball-joint connection device (25) of a pitch rod (20) of a rotor assembly (5) of an aircraft (1), said rotor assembly (5) being provided with a plurality of blades (10) and of pitch rods (20), each pitch rod (20) extending longitudinally from a first zone (21) to a second zone (22), at least one of said first and second zones (21, 22) comprising a ball-joint connection device (25), said rotor assembly (5) including at least one detection system (30) according to any one of claims 1 to 9, at least one deformation gauge being a bending deformation gauge (35, 36, 38, 39) arranged to measure bending deformation of the pitch rod, said method comprising the following steps:
- establishing a time-varying bending measurement signal by measuring deformation of the pitch rod (20) with the bending deformation gauge (35, 36, 38, 39),
- establishing a processed measurement signal at least by performing a Fourier transform on the time-varying bending measurement signal, and detecting a degree of wear that requires replacement of the ball-joint connection device (25) when the processed measurement signal presents, at a predetermined frequency or in a predetermined range of frequencies, at least one frequency component that has an amplitude that becomes greater than a bending threshold.
